# EUROPÄISCHE PATENTSCHRIFT

(11) **EP 3 536 130 B1**
(45) Veröffentlichungstag und Bekanntmachung des Hinweises auf die Patenterteilung: **12.01.2022**
(21) Anmeldenummer: 17791012.2
(22) Anmeldetag: 18.10.2017
(51) Int. Cl.: H05B 45/18, H05B 45/28, H05B 47/18

(54) **BELEUCHTUNGSVORRICHTUNG UND BELEUCHTUNGSSYSTEM FÜR EIN KRAFTFAHRZEUG SOWIE VERFAHREN ZUM BETREIBEN EINES BELEUCHTUNGSSYSTEMS FÜR EIN KRAFTFAHRZEUG**
LIGHTING DEVICE AND LIGHTING SYSTEM FOR A MOTOR VEHICLE AND METHOD FOR OPERATING A LIGHTING SYSTEM FOR A MOTOR VEHICLE
DISPOSITIF D'ÉCLAIRAGE ET SYSTÈME D'ÉCLAIRAGE POUR VÉHICULE À MOTEUR, ET PROCÉDÉ POUR FAIRE FONCTIONNER UN SYSTÈME D'ÉCLAIRAGE DESTINÉ À UN VÉHICULE À MOTEUR

(30) Priorität: 07.11.2016 DE 102016221771
(43) Veröffentlichungstag der Anmeldung: 11.09.2019
(73) Patentinhaber: Bayerische Motoren Werke Aktiengesellschaft, 80809 München (DE)
(72) Erfinder: ISELE, Robert, 82256 Fuerstenfeldbruck (DE); ALTINGER, Florian, 80807 München (DE); BRUEGL, Juergen, 81669 Muenchen (DE)
(86) Internationale Anmeldenummer: PCT/EP2017/076527
(87) Internationale Veröffentlichungsnummer: WO 2018/082919

(56) Entgegenhaltungen:
- DE-A1-102015 009 736
- US-A1- 2010 219 758
- US-A1- 2011 309 746
- US-A1- 2016 023 594

## Beschreibung

Beleuchtungsvorrichtung und Beleuchtungssystem für ein Kraftfahrzeug sowie Verfahren zum Betreiben eines Beleuchtungssystems für ein Kraftfahrzeug

Die Erfindung betrifft eine Beleuchtungsvorrichtung und ein Beleuchtungssystem für ein Kraftfahrzeug sowie ein korrespondierendes Verfahren zum Betreiben eines Beleuchtungssystems, die eine platzsparende Anordnung sowie einen zuverlässigen und erweiterten Betrieb der Beleuchtungsvorrichtung ermöglichen.

Beleuchtungsvorrichtungen in Kraftfahrzeugen mit Mehrfarb-LED-Einheiten (LED = "Light Emitting Diode") sind aus dem Stand der Technik bekannt. Solche LED-Einheiten umfassen in der Regel mehrere Einfarb-LEDs und werden üblicherweise mit LED-Treibern angesteuert, um eine gewünschte Helligkeit und einen Farbort (d.h. eine Mischfarbe) zu variieren. Hierzu wird ein Modul mit einem Mikroprozessor verwendet, der zum einen eine Kommunikation mit einem Kraftfahrzeug-Datenbus übernimmt und zum anderen die LED-Einheiten treibt, üblicherweise über PWM-Ausgänge (PWM = "Puls-Width Modulation"). Als Kraftfahrzeug-Datenbus kommt dabei häufig der sog. LIN-Bus (LIN = "Local Interconnect Network") zum Einsatz.

Manche Mehrfarb-LED-Einheiten verfügen über eine integrierte Schaltung, welche zusammen mit den Einfarb-LEDs in einem gemeinsamen Gehäuse untergebracht ist, wodurch eine hohe Packungsdichte erreicht werden kann. Die einzelnen LED-Einheiten werden über einen Datenstrom gesteuert. Dabei werden Parametrisierungen, die in Beleuchtungsvorrichtungen mit Mehrfarb-LED-Einheiten zum Betrieb der einzelnen LED-Einheiten benötigt werden, in einem zentralen Verarbeitungsmodul hinterlegt.

Die Druckschrift WO 2014/067830 A1 offenbart ein Verfahren und eine Anordnung zur temperaturkorrigierten Steuerung von LEDs mittels Look-up-Tabellen. Dabei ist in einem LED-Modul aus mehreren LED-Kanälen für jeden Zielfarbort, der durch das LED-Modul erreichbar ist, eine Look-up-Tabelle vorgesehen, in welcher der Betriebsstrom für jeden LED-Kanal in Abhängigkeit von Temperatur abgelegt ist. Die Druckschrift US 2010/0219758 A1 offenbart eine Beleuchtungseinheit mit Beleuchtungsmodulen, die einen Modulträger umfasst, auf dem eine Lichtquelle und Leuchtdioden angeordnet sind. Darüber hinaus sind ein Temperatursensor und eine Modulelektronik vorgesehen, welche mittels einer digitale Schaltung mit einem Mikrocontroller eine Steuerung der LEDs in Abhängigkeit von Parametern wie der Temperatur und einer Helligkeit ermöglicht, um eine konstante Lichtemission der LEDs bereitzustellen.

Die Druckschrift DE 102015009736 A1 offenbart ein Leuchtmodul mit einem Farbkanal, welcher mindestens eine Lichtquelle enthält. Das Leuchtmodul umfasst ferner einen Speicher für mindestens einen Kennwert der Lichtquelle oder des Farbkanals. Ferner ist ein Beleuchtungssystem mit einem solchen Leuchtmodul offenbart, das eine Steuer- und Auswerteeinheit aufweist, um einen Betriebsparameter für die Lichtquelle auf Basis des Kennwertes aus dem Speicher des Leuchtmoduls zu ermitteln.

Die Druckschrift US 2011/309746 A1 offenbart ein modulares Beleuchtungssystem mit einer Leuchtdioden (LED)-Einheit, die ein LED-Modul mit: mehrere LEDs umfasst. Das Beleuchtungssystem umfasst ferner eine LED-Ansteuerschaltung, die die LEDs ansteuert und einen LED-Steuerbus, der LED-Beleuchtungssteuerinformationen zur LED-Ansteuerschaltung überträgt. Mittels eines Mikrocontrollers, der Beleuchtungsanweisungen von einer externen Quelle empfängt; werden Beleuchtungsanweisungen gesendet und die LEDs angesteuert.

Es ist eine Aufgabe, die der Erfindung zugrunde liegt, eine Beleuchtungsvorrichtung und ein Beleuchtungssystem für ein Kraftfahrzeug sowie ein korrespondierendes Verfahren zum Betreiben eines Beleuchtungssystems zu schaffen, die eine platzsparende Anordnung ermöglichen sowie zu einem zuverlässigen und erweiterten Betrieb der Beleuchtungsvorrichtung beitragen können.

Die Aufgabe wird durch die Merkmale der unabhängigen Patentansprüche gelöst. Vorteilhafte Ausgestaltungen sind in den Unteransprüchen angegeben.

Gemäß einem ersten Aspekt der Erfindung umfasst eine Beleuchtungsvorrichtung für ein Kraftfahrzeug ein Verarbeitungsmodul, welches dazu ausgebildet ist, Signale von einem Datenbus des Kraftfahrzeugs zu empfangen, zu verarbeiten und zu versenden. Die Beleuchtungsvorrichtung umfasst weiter eine Mehrzahl von LED-Einheit, welche jeweils dazu ausgebildet sind, in einem betriebsgemäßen Zustand Licht mit einstellbarer Helligkeit und vorgegebenem Farbort zu emittieren, wobei die LED-Einheiten jeweils einen Mikrocontroller und eine Mehrzahl von LEDs aufweisen und wobei der jeweilige Mikrocontroller und die zugehörigen LEDs von einem Gehäuse der jeweiligen LED-Einheit umgeben sind.

Die LED-Einheiten umfassen außerdem jeweils einen Temperatursensor, der dazu ausgebildet ist, einen aktuellen Temperaturwert an der zugehörigen LED-Einheit zu messen und bidirektional mit dem Verarbeitungsmodul zu kommunizieren, sodass mittels des jeweiligen Temperatursensors und des Verarbeitungsmoduls der aktuelle Temperaturwert an der jeweiligen LED-Einheit ermittelt werden kann. Die Beleuchtungsvorrichtung ist ferner derart eingerichtet, dass der aktuelle Temperaturwert an der jeweiligen LED-Einheit unabhängig von einem Betriebszustand der zugehörigen LEDs abrufbar ist. Ferner sind der jeweilige Mikrocontroller und das Verarbeitungsmodul dazu ausgebildet, bidirektional miteinander zu kommunizieren. Ferner ist ein jeweiliger Temperatursensor dazu ausgebildet, bidirektional mit dem Mikrocontroller zu kommunizieren, sodass mittels des Temperatursensors und des Mikrocontrollers der aktuelle Temperaturwert an der jeweiligen LED-Einheit abrufbar ist.

Mittels der beschriebenen Beleuchtungsvorrichtung kann nicht nur eine platzsparende Beleuchtungsfunktion realisiert werden, um beispielsweise einen Abschnitt in oder an einem Kraftfahrzeug zu beleuchten, sondern der beschriebene Aufbau ermöglicht darüber hinaus, einen aktuellen Temperaturwert am Ort der LED-Einheit abzurufen, indem der Temperatursensor mittels des Verarbeitungsmoduls angesteuert wird. Auf diese Weise kann die zur Beleuchtung befähigte LED-Einheit genutzt werden, um Daten zu erheben, die im Zusammenhang mit dem Temperatursensor Informationen über eine Umgebungstemperatur enthalten. Die beschriebene Beleuchtungsvorrichtung realisiert somit eine Anordnung, welche durch Ansteuern der LED-Einheit ein gewünschtes Beleuchten und aufgrund der bidirektionalen Kommunikationsfähigkeit eine Rücklesbarkeit von Daten von der LED-Einheit ermöglicht.

Die Beleuchtungsvorrichtung ist für ein Kraftfahrzeug, wie zum Beispiel einen PKW und gegebenenfalls auch einen LKW, vorgesehen. Die Beleuchtungsvorrichtung weist mehrere LED-Einheiten auf, die jeweils einen Mikrokontroller und mehrere LEDs sowie einen internen Temperatursensor umfassen, die jeweils in ein gemeinsames Gehäuse der jeweiligen LED-Einheit integriert sind. Eine einzelne LED-Einheit realisiert somit ein Halbleiterbauelement, welches aufgrund des internen Mikrokontrollers auch als "intelligente" LED bezeichnet werden kann.

Die jeweilige LED-Einheit ist an einem internen Datenbus (d.h. einen Datenbus innerhalb der Beleuchtungsvorrichtung) angeschlossen, welcher wiederum mit dem Verarbeitungsmodul gekoppelt ist. Mittels des Verarbeitungsmoduls können Signale empfangen, verarbeitet und versendet werden. Solche Signale umfassen beispielsweise externe Steuerbefehle von einem Kraftfahrzeug-Datenbus, die mittels des Verarbeitungsmoduls in interne Steuerbefehle umgewandelt und auf den internen Datenbus gegeben werden können, um die Helligkeit und den Farbort einer oder mehrerer LED-Einheiten einzustellen. Der interne Datenbus kann z.B. ein SPI-Datenbus (SPI = "Serial Peripheral Interface") sein oder gegebenenfalls auch ein anderer Datenbus, wie z.B. ein differentieller Datenbus, der digitale Daten über eine Spannungsdifferenz zwischen zwei Leitungen codiert. Der Kraftfahrzeug-Datenbus kann beispielsweise ein LIN-Bus (LIN = "Local Interconnect Network") oder auch ein CAN-Bus (CAN = "Controller Area Network") sein.

Die eine oder mehrere LED-Einheiten sind jeweils in Bezug auf ihre Helligkeit (d.h. Lichtintensität) einstellbar und emittieren Licht mit einem vorgegebenen Farbort. Der Begriff des Farborts beschreibt eine Farbe des emittierenden Lichts und kann einfarbig oder als Mischfarbe realisiert sein, welche durch die jeweilige LED-Einheit erzeugt wird. Der Farbort kann beispielsweise als Ort in einem Farbdiagramm, insbesondere in einem Farbdiagramm des CIE-Normenvalenzsystems (CIE = "Commission internationale de l′eclairageʺ), angegeben werden.

Zum Beispiel kann eine LED-Einheit mehrere LEDs aufweisen, welche blaues Licht oder Licht unterschiedlicher Farbe beziehungsweise Wellenlänge emittieren. Im letzteren Fall realisiert die LED-Einheit eine Mehrfarb-LED-Einheit mit einstellbarem Farbort. Eine jeweilige LED-Einheit weist als ein einzelnes Halbleiterbauelement vorzugsweise mindestens drei Einfarb-LEDs unterschiedlicher Farbe auf, die zusammen mit dem Mikrocontroller der LED-Einheit in einem gemeinsamen Gehäuse des Halbleiterbauelements untergebracht sind. Darüber hinaus ist in dem Halbleiterbauelement einer jeweiligen LED-Einheit der Temperatursensor integriert, mittels dessen ein aktueller (d.h. gerade vorliegender) Temperaturwert an der jeweiligen LED-Einheit messbar ist und dem Verarbeitungsmodul und/oder dem Mikrocontroller bereitstellt werden kann.

Dadurch, dass mittels der Beleuchtungsvorrichtung der aktuelle Temperaturwert an der LED-Einheit unabhängig von einem Betriebszustand der LEDs abrufbar ist, kann ein Ermitteln und Abrufen des aktuellen Temperaturwertes an der LED-Einheit unabhängig von einem Ansteuern und Betreiben der jeweiligen LEDs erfolgen. Die Beleuchtungsvorrichtung kann daher aufgrund des beschriebenen Aufbaus über ihre Beleuchtungsfunktion hinaus dazu verwendet werden, um Daten über eine Umgebungstemperatur am Ort der jeweiligen LED-Einheit zu erheben. Ein Ermitteln des aktuellen Temperaturwertes kann aber auch während eines Beleuchtens mittels der LEDs erfolgen und für ein nutzbringendes Betreiben der Beleuchtungsvorrichtung in ein Betätigen der Beleuchtungsfunktion mit einbezogen werden, um eine temperaturabhängige Betriebssteuerung der jeweiligen LED-Einheit zu realisieren.

In Abhängigkeit von dem aktuellen Temperaturwert der jeweiligen LED-Einheit kann diese mittels des Mikrocontrollers gezielt angesteuert werden, sodass ein Beitrag zu einem zuverlässigen und nutzbringendem Betrieb der Beleuchtungsvorrichtung geleistet wird. Basierend auf der Steuerung des Betriebsstroms der jeweiligen LED einer LED-Einheit kann jede LED der LED-Einheit mittels des Mikrocontrollers einzeln angesteuert werden, beispielsweise über eine Pulsweitenmodulation. Darüber hinaus ermöglicht die beschriebene Beleuchtungsvorrichtung ein Ermitteln und Abrufen eines aktuellen Temperaturwertes unabhängig von einer Steuerung der Beleuchtungsfunktion, sodass mittels des Verarbeitungsmoduls und des Temperatursensors ein Erheben von Daten und Abfragen eines aktuellen Temperaturwertes zu jeder Zeit erfolgen kann.

Durch die direkte Integration eines Temperatursensors in der jeweiligen LED-Einheit kann eine aktuelle Temperatur an der Position der LED-Einheit präzise erfasst werden, sodass unmittelbar auf Spannungs- und Temperaturunterschiede eingegangen werden kann und diese intern in der LED-Einheit bei einem Betrieb berücksichtigt und kompensiert werden können. Außerdem können die seitens des Verarbeitungsmoduls erhobenen Daten weiterverarbeitet und beispielsweise Farbverläufe und Farbänderungen mittels des Mikrocontrollers vorgenommen werden. Die Temperaturmessung mittels des Temperatursensors kann dabei auf bekannten Technologien beruhen. Zum Beispiel kann der Temperatursensor die Temperatur mittels einer Widerstandsmessung oder mittels Infrarot oder mittels einer Diode erfassen.

Die beschriebene Beleuchtungsvorrichtung weist somit eine Vielzahl von Funktionen auf, die jeweils in einem Halbleitergehäuse einer LED-Einheit integriert sind, sodass benötigte Verkabelungen beziehungsweise Verdrahtungen der LED-Einheit mit dem Verarbeitungsmodul reduziert werden können und das Verarbeitungsmodul als Ansteuerungscontroller kleiner ausgestaltet werden kann. Auf diese Weise kann ein platzsparender Aufbau der Beleuchtungsvorrichtung realisiert werden, welcher sich vorteilhaft auf mögliche Einbaupositionen in oder an einem Kraftfahrzeug auswirken kann. Ein solcher Bauraumvorteil ist insbesondere bei einer Beleuchtungsvorrichtung mit einer hohen Anzahl an LED-Einheiten präsent.

Aufgrund des beschriebenen Aufbaus der Beleuchtungsvorrichtung und der Kommunikationsfähigkeit des Temperatursensors sinkt eine Kommunikationsrate während eine Übertragungsgeschwindigkeit von Daten steigt. Auf diese Weise kann mittels der Beleuchtungsvorrichtung ein nutzbringender Beitrag für eine elektromagnetische Verträglichkeit in einem Kraftfahrzeug geleistet werden. Darüber hinaus können Schnittstellenkosten reduziert werden, da diese kleiner ausgestaltet werden können. Eine Videofähigkeit der Beleuchtungsvorrichtung bleibt dabei erhalten, da ausreichend Bilder pro Sekunde übertragbar sind. Außerdem kann die LED-Einheit einen weiteren Temperatursensor umfassen, um ein besonders zuverlässiges Ermitteln und Abrufen eines aktuellen Temperaturwertes an der LED-Einheit zu ermöglichen.

Die mittels der Beleuchtungsvorrichtung erhebbaren Daten einer jeweiligen LED-Einheit können darüber hinaus dazu beitragen, den sogenannten ASIL-Standard (ASIL = "Automotive Safety Integrity Level") vorgegeben zu halten oder zu verbessern. Dieser zielt darauf ab, ein vorgegebenes Grundsicherheitslevel zu gewährleisten.

Dadurch, dass der Temperatursensor dazu ausgebildet ist, bidirektional mit dem Mikrocontroller zu kommunizieren, ist mittels des Temperatursensors und des Mikrocontrollers der aktuelle Temperaturwert an der LED-Einheit abrufbar. Neben einer direkten Kommunikation mit dem Verarbeitungsmodul kann auch eine Kommunikation durch den jeweiligen Mikrocontroller der LED-Einheit eingerichtet sein, um einen aktuellen Temperaturwert an der zugehörigen LED-Einheit abzurufen.

Zum Beispiel kann eine Betriebssteuerung der LED-Einheit temperaturabhängig an aktuelle Umgebungsbedingungen angepasst werden. Auf diese Weise kann zum Beispiel auch ein eingestellter Farbort und eine eingestellte Helligkeit in einem Betrieb der jeweiligen LED-Einheit möglichst konstant gehalten werden. Somit kann unter Berücksichtigung von lokalen Temperaturen der einzelnen LED-Einheiten individuell und präzise eine gewünschte Helligkeit und ein vorgegebener Farbort eingestellt werden, wodurch ein gleichbleibendes Erscheinungsbild der Beleuchtungsvorrichtung erreicht wird. Darüber hinaus kann die Helligkeit der jeweiligen LED-Einheit mittels des Mikrocontrollers kontrolliert verringert werden, um Beschädigungen der LED-Einheit aufgrund zu hoher Temperaturen zu vermeiden.

Das Verarbeitungsmodul ist insbesondere dazu eingerichtet, mit dem Temperatursensor einer jeweiligen LED-Einheit signaltechnisch zu kommunizieren und einen aktuellen Temperaturwert abzurufen. Eine solche Kommunikation umfasst ein Empfangen und Versenden von Daten und kann direkt zwischen den jeweiligen Komponenten erfolgen. Zusätzlich ist das Verarbeitungsmodul dazu ausgebildet mittels des Mikrocontrollers mit dem zugehörigen Temperatursensor der jeweiligen LED-Einheit zu kommunizieren. Mittels des Verarbeitungsmodules kann jeweils jede LED-Einheit beziehungsweise jeder Temperatursensor einer jeweiligen LED-Einheit einzeln abgerufen werden, sodass eine hohe Skalierbarkeit der Beleuchtungsvorrichtung möglich ist. Gemäß einer Weiterbildung der Beleuchtungsvorrichtung ist die LED-Einheit als Mehrfarb-LED-Einheit und die LEDs jeweils als Einfarb-LEDs ausgebildet. Gemäß einer weiteren Weiterbildung der Beleuchtungsvorrichtung umfasst die LED-Einheit eine RGB-LED-Einheit und/oder eine RGBW-LED-Einheit. Eine RGB-LED-Einheit umfasst in an sich bekannter Weise eine rote, grüne und blaue Einfarb-LED und eine RGBW-LED-Einheit umfasst zusätzlich zu einer roten, grünen und blauen LED auch eine Weißlicht-LED.

Gemäß einer Weiterbildung der Beleuchtungsvorrichtung weist die LED-Einheit einen Lichtsensor auf, der dazu ausgebildet ist, einen aktuellen Helligkeitswert an der LED-Einheit zu messen und bidirektional mit dem Verarbeitungsmodul zu kommunizieren, sodass mittels des Lichtsensors und des Verarbeitungsmoduls der aktuelle Helligkeitswert an der LED-Einheit abrufbar ist. Mittels des Lichtsensors können weitere Daten der LED-Einheit erhoben werden, die zu einem zuverlässigen und erweiterten Betrieb der Beleuchtungsvorrichtung beitragen können.

Der Lichtsensor kann als ein separates Element ausgebildet sein, welches in dem Gehäuse der jeweiligen LED-Einheit angeordnet ist und analog zu dem Temperatursensor mittels des Verarbeitungsmoduls und/oder mittels des zugehörigen Mikrocontrollers angesteuert werden kann. Alternativ oder zusätzlich kann die LED-Einheit an sich als Lichtsensor fungieren, sodass kein separater Lichtsensor zum Ermitteln und Abrufen eines aktuellen Helligkeitswertes an der LED-Einheit benötigt wird. Die LED-Einheit realisiert ein Halbleiterbauelement, welches in einem Betrieb bei anliegender elektrischer Spannung beziehungsweise Strom Licht emittiert. Darüber hinaus kann die LED-Einheit in einem Nichtbetrieb der LEDs als Halbleiter-Diode, wie eine Photodiode, fungieren, sodass auf Basis von Lichteinstrahlung ein elektrischer Strom beziehungsweise Spannung generiert wird.

Die beschriebene Beleuchtungsvorrichtung dient nicht nur der Realisierung einer Beleuchtungsfunktion, sondern auch der funktionalen Sensorik und nutzt vorhandenen Bauraum, um weitere Daten zu sammeln. Die LED-Technik der Beleuchtungsvorrichtung ist somit nutzbringend zum Beleuchten und zur Temperaturmessung sowie gegebenenfalls zur Helligkeitsmessung einsetzbar und ermöglicht eine Rückholbarkeit von Daten, auch wenn eine elektrische Spannung zwischenzeitlich nicht mehr anliegt. In einem solchen Fall kann ein Abrufen eines vorangegangenen Ist-Zustands erfolgen. Aufgrund des beschriebenen Aufbaus der Beleuchtungsvorrichtung beziehungsweise einer jeweiligen LED-Einheit, kann das Verarbeitungsmodul als Ansteuerungsmodul kleiner ausgeführt sein, sodass weiter zu einem übersichtlichen und platzsparenden Aufbau beigetragen wird. Darüber hinaus können mittels einer Vielzahl von LED-Einheiten, welche in einem verbauten Zustand in und/oder an einem Kraftfahrzeug angeordnet sind, Zusammenhänge über ein Fahrzeugkollektiv des Kraftfahrzeugs ermittelt und Informationen über lokale Eigenheiten einer jeweils verbauten LED-Einheit erlangt werden.

Gemäß einem weiteren Aspekt der Erfindung umfasst ein Beleuchtungssystem für ein Kraftfahrzeug mindestens eine Ausgestaltung der zuvor beschriebenen Beleuchtungsvorrichtung sowie das Kraftfahrzeug. Die Beleuchtungsvorrichtung ist insbesondere in oder an dem Kraftfahrzeug angeordnet und verbaut und bildet eine Innenraumbeleuchtung und/oder eine Außenbeleuchtung aus. Das Kraftfahrzeug kann auch mehrere Ausgestaltungen der beschriebenen Beleuchtungsvorrichtung aufweisen, von denen beispielsweise eine in und eine weitere an dem Kraftfahrzeug angeordnet ist und eine entsprechende Beleuchtungsfunktion realisiert. Hierdurch können ansprechende Lichteffekte mit einem homogenen Erscheinungsbild generiert werden. Darüber hinaus ermöglicht die Beleuchtungsvorrichtung ein Abrufen eines aktuellen Temperaturwertes an der jeweiligen LED-Einheit unabhängig von dem Betriebszustand der LEDs und einer gegebenenfalls aktivierten Beleuchtungsfunktion. Da das Beleuchtungssystem wenigstens eine Ausgestaltung der zuvor beschriebenen Beleuchtungsvorrichtung umfasst, sind sämtliche Merkmale und Eigenschaften der Beleuchtungsvorrichtung auch für das Beleuchtungssystem offenbart und umgekehrt.

Gemäß einem weiteren Aspekt der Erfindung umfasst ein Verfahren zum Betreiben einer Ausgestaltung des zuvor beschriebenen Beleuchtungssystems für ein Kraftfahrzeug ein Ansteuern des Temperatursensors mittels des Verarbeitungsmoduls zum Ermitteln eines aktuellen Temperaturwertes an der LED-Einheit und ein Empfangen von Messsignalen des Temperatursensors. Das Verfahren umfasst weiter ein Ermitteln eines aktuellen Temperaturwertes an der LED-Einheit in Abhängigkeit der empfangenen Messsignale des Temperatursensors und ein Steuern einer Funktion des Kraftfahrzeugs in Abhängigkeit des ermittelten Temperaturwertes an der LED-Einheit.

Das beschriebene Verfahren ermöglicht ein Abrufen eines aktuellen Temperaturwertes an der jeweiligen LED-Einheit des Beleuchtungssystems beziehungsweise der Beleuchtungsvorrichtung, sodass beispielsweise ein Wert einer Umgebungstemperatur am Ort der jeweiligen LED-Einheit ermittelt werden kann. Das Steuern einer Funktion des Kraftfahrzeugs kann den Betrieb der LED-Einheit beziehungsweise der Beleuchtungsfunktion der Beleuchtungsvorrichtung umfassen, aber das Verfahren ermöglicht auch ein Steuern einer Funktion in Abhängigkeit des ermittelten Temperaturwertes außer dem lichtemittierenden Betrieb der LED-Einheit.

Die mittels der LED-Einheit erhobenen Daten werden von dem Verarbeitungsmodul gesammelt und ausgewertet oder für spätere Verarbeitung bereitgestellt werden. Der ermittelte Temperaturwert kann zum Beispiel in einer Datenbank des Kraftfahrzeugs oder einer externen Datenbank abgespeichert und für weitere Auswertungen hinterlegt werden, um beispielsweise einen Temperaturverlauf ermitteln zu können. Der ermittelte Temperaturwert kann auch dazu genutzt werden, um beispielsweise eine Lüftungs- oder Klimaanlage des Kraftfahrzeugs in Abhängigkeit des ermittelten Temperaturwertes zu steuern. Der Mikrocontroller ist zum Beispiel derart ausgestaltet, dass er im Falle, dass der aktuelle Temperaturwert eine vorgegebene Schwelle über- oder unterschreitet, in Kommunikation mit dem Verarbeitungsmodul tritt und eine Ausgabe bereitstellt, welche in einen externen Steuerbefehl für den Kraftfahrzeug-Datenbus gewandelt wird und ein Aktivieren der Klimaanlage des Kraftfahrzeugs bewirkt und somit ein Erwärmen oder Abkühlen des Fahrzeuginnenraums einleitet. Ein solches Anpassen einer Fahrzeugrauminnentemperatur kann gegebenenfalls lokal im Bereich der jeweiligen LED-Einheit durchgeführt werden, sodass beispielsweise lediglich der hintere Fahrzeugbereich erwärmt wird.

Ein Abrufen beziehungsweise Ermitteln eines aktuellen Temperaturwertes an der Position der LED-Einheit kann fortlaufend oder in vorgegebenen Zeitintervallen oder in Abhängigkeit von einer Anweisung durchgeführt werden. Da das Verfahren zum Betreiben einer Ausgestaltung des zuvor beschriebenen Beleuchtungssystems beziehungsweise der zuvor beschriebenen Beleuchtungsvorrichtung umfasst, sind sämtliche Merkmale und Eigenschaften der Beleuchtungsvorrichtung auch für das Verfahren zum Betreiben des Beleuchtungssystems offenbart und umgekehrt.

Das Verfahren kann weiter ein Ansteuern des Lichtsensors mittels des Verarbeitungsmoduls zum Ermitteln eines aktuellen Helligkeitswertes an der LED-Einheit umfassen, sodass in Abhängigkeit von empfangenen Messsignalen des Lichtsensors ein Helligkeitswert an dem Ort der LED-Einheit ermittelt wird und eine Funktion des Kraftfahrzeugs in Abhängigkeit von dem ermittelten Helligkeitswert gesteuert wird.

Ausführungsbeispiele der Erfindung sind im Folgenden anhand der schematischen Zeichnungen näher erläutert. Es zeigen:
- Figur 1: ein Ausführungsbeispiel eines Beleuchtungssystems für ein Kraftfahrzeug in einer schematischen Aufsicht,
- Figur 2: ein Ausführungsbeispiel einer Beleuchtungsvorrichtung für ein Kraftfahrzeug in einer schematischen Darstellung,
- Figur 3: ein Ausführungsbeispiel einer LED-Einheit der Beleuchtungsvorrichtung nach Figur 2 in einer Detailansicht.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit zugehörigen Bezugszeichen gekennzeichnet.

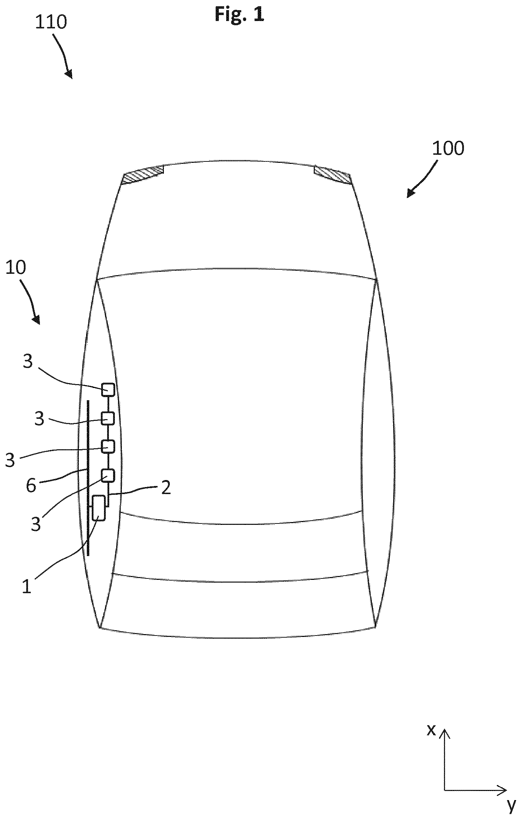

Figur 1 illustriert schematisch in einer Aufsicht ein Beleuchtungssystem 110, welches ein Kraftfahrzeug 100 sowie eine Beleuchtungsvorrichtung 10 mit einer Mehrzahl von LED-Einheiten 3 umfasst. Die LED-Einheiten 3 sind jeweils mit einem internen Datenbus 2 gekoppelt, welcher die LED-Einheiten 3 wiederum mit einem Verarbeitungsmodul 1 koppelt. Das Verarbeitungsmodul 1 ist wiederum mit einem Kraftfahrzeug-Datenbus 6 gekoppelt.

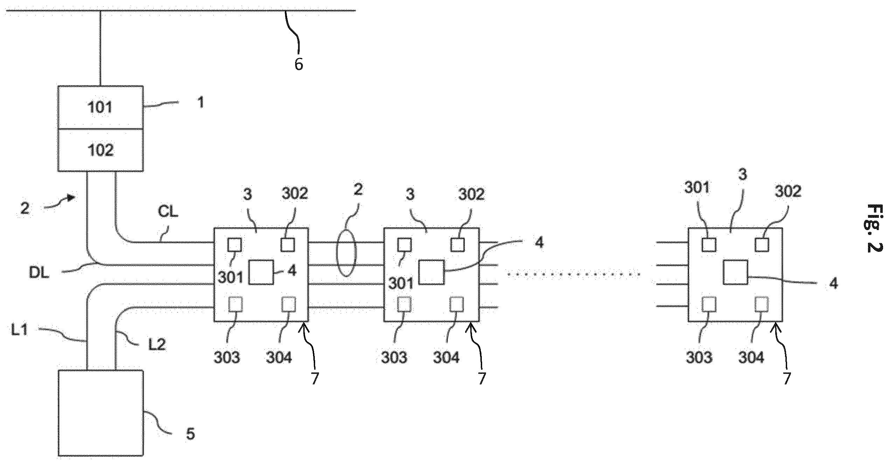

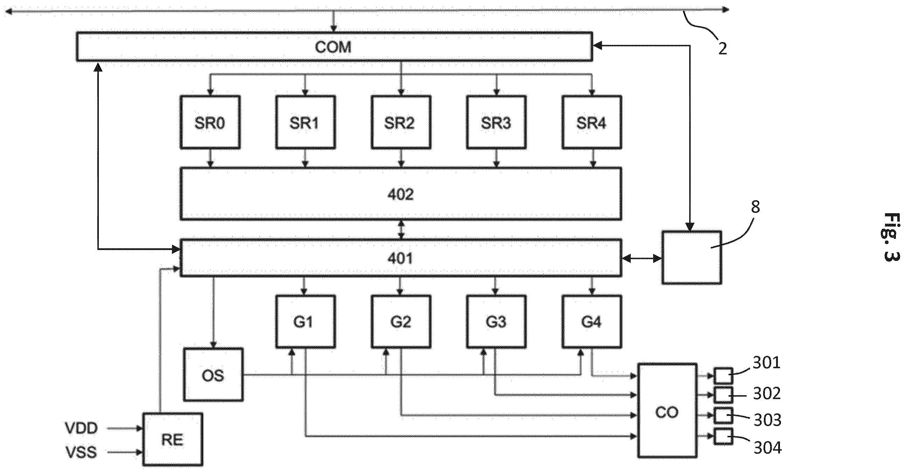

Wie anhand der nachfolgenden Figuren 2 und 3 näher erläutert wird, ermöglicht die Beleuchtungsvorrichtung 10 beziehungsweise das Beleuchtungssystem 110 eine platzsparende Beleuchtungsfunktion, um beispielsweise einen Abschnitt in oder an dem Kraftfahrzeug 100 zu beleuchten, und darüber hinaus ein Ermitteln eines aktuellen Temperaturwertes am Ort der einer jeweiligen LED-Einheit 3, auch unabhängig von der jeweiligen Beleuchtungsfunktion.

Figur 2 stellt schematisch eine Ausführungsform der Beleuchtungsvorrichtung 10 dar, welche beispielsweise, wie in Figur 1 illustriert, in dem Kraftfahrzeug 100 eine Innenbeleuchtung ausbildet. Alternativ kann die Beleuchtungsvorrichtung 10 als Außenbeleuchtung an dem Kraftfahrzeug 100 angeordnet sein oder das Beleuchtungssystem 110 umfasst mehrere Beleuchtungsvorrichtungen 10, die in und/oder an dem Kraftfahrzeug 100 verbaut sind.

Die Beleuchtungsvorrichtung 10 weist als Leuchtmittel eine Mehrzahl von auf einem Band angeordneten Mehrfarb-LED-Einheiten 3 auf. Diese Mehrfarb-LED-Einheiten 3, welche nachfolgend auch einfach als LED-Einheiten 3 bezeichnet werden, realisieren jeweils ein einzelnes Halbleiterbauelement mit mehreren Einfarb-LEDs 301-304 und einem Mikrocontroller 4. Die Einfarb-LEDs 301-304 und der Mikrocontroller 4 sind von einem Gehäuse 7 einer jeweiligen LED-Einheit 3 umgeben und gemeinsam mit einem Temperatursensor 8 (s. Figur 3) in dem Gehäuse 7 des Halbleiterbauelements integriert.

Die Einfarb-LED 301 ist zum Beispiel als eine rote LED, die Einfarb-LED 302 als eine grüne LED, die Einfarb-LED 303 als eine blaue LED und die Einfarb-LED 304 als eine weiße LED ausgebildet. Die Farbangaben beziehen sich dabei auf die Farbe beziehungsweise die Wellenlänge oder den Wellenlängenbereich des von der jeweiligen LED emittierenden Lichts. Mit den bandförmig angeordneten LED-Einheiten 3 kann eine sehr hohe Packungsdichte erreicht werden (je nach Gehäuseform von zum Beispiel 144 bis 367 LEDs/m), sodass ein platzsparenden Aufbau mittels der Beleuchtungsvorrichtung 10 erzielbar ist.

Die einzelnen LED-Einheiten 3 werden über einen digitalen Datenstrom in der Form eines Bitstroms angesteuert, der mittels des internen Datenbusses 2 der Beleuchtungsvorrichtung 10 den einzelnen LED-Einheiten 3 zugeführt wird. Der interne Datenbus 2 umfasst eine Leitung CL für den Takt und eine Leitung DL für den Bitstrom.

Die Signale auf dem internen Datenbus 2 stammen von dem Verarbeitungsmodul 1, das an den Kraftfahrzeug-Datenbus 6 des Kraftfahrzeugs 100 gekoppelt ist. Das Verarbeitungsmodul 1 umfasst einen LIN-Transceiver 101, der entsprechende digitale Signale zur Ansteuerung der LED-Einheiten 3 vom Kraftfahrzeug-Datenbus 6 abgreift, sowie ein Mikroprozessor 102, der die abgegriffenen Signale in entsprechende Datensignale auf der Datenleitung DL des internen Datenbus 2 wandelt. Die auf dem Kraftfahrzeug-Datenbus 6 übertragenen Signale umfassen dabei Signale, welche für die Beleuchtungsvorrichtung 10 bestimmt sind und ein für die Beleuchtungsvorrichtung 10 einzustellendes Lichtmuster festlegen.

Diese Signale stammen wiederum von einem Steuergerät des Kraftfahrzeugs 100, welches beispielsweise basierend auf einer Eingabe des Fahrers das zu generierende Lichtmuster festlegt und als entsprechendes Signal auf den Kraftfahrzeug-Datenbus 6 gibt. Über das Verarbeitungsmodul 1 wird erkannt, ob das Lichtmuster entsprechend dem aktuellen Signal auf dem Kraftfahrzeug-Datenbus 6 für die Beleuchtungsvorrichtung vorgesehen ist. Ist dies der Fall, wird das Signal mittels des Mikroprozessors 102 in ein entsprechendes Signal für den internen Datenbus 2 umgesetzt.

Der Kraftfahrzeug-Datenbus 6 ist beispielsweise ein LIN-Bus (LIN = "Local Interconnect Network"). Der interne Datenbus 2 kann zum Beispiel ein SPI-Bus sein (SPI = "Serial Peripheral Interface"). Vorzugsweise werden dabei die Signale für den interne Datenbus 2 von dem Mikroprozessor 102 mittels einer SPI-Software erzeugt. Eine SPI-Software stellt eine Programmbibliothek dar, mit der beliebige freie Pins des Mikroprozessors 102 zur Signalabgabe auf den SPI-Bus genutzt werden können. Alternativ kann jedoch auch SPI-Hardware eingesetzt werden. Dabei sind spezielle SPI-Pins zur Signalabgabe auf den SPI-Bus vorgesehen. Die Verwendung von SPI-Software ist vorteilhaft, da in dem internen Datenbus 2 mehrere Leitungen DL und CL zur Ansteuerung einer größeren Anzahl von LED-Einheiten 3 vorgesehen sein können. Der interne Datenbus 2 kann als Alternative zu einem SPI-Bus auch als differentieller Datenbus oder als beliebig anderer Datenbus ausgestaltet sein. Ein differentieller Datenbus zeichnet sich dadurch aus, dass er digitale Daten über eine Spannungsdifferenz zwischen zwei Leitungen codiert.

In der Ausführungsform gemäß Figur 2 sind neben den Leitungen CL und DL zwei Stromleitungen L1 und L2 vorgesehen, welche an eine Gleichspannungsversorgung 5 angeschlossen sind. Basierend auf dem über die Datenleitung DL empfangenen Bitstrom erfolgt eine Pulsweitenmodulation (PWM) des den einzelnen LEDs 301-304 zugeführten Stroms, um hierdurch die LEDs 301-304 entsprechend dem Bitstrom auf der Datenleitung DL anzusteuern.

Der Aufbau einer einzelnen LED-Einheit 3 gemäß den Figuren 1 und 2 ist im Detail in Figur 3 illustriert. Die dargestellten Komponenten der LED-Einheit 3 sind dabei in einem einzelnen Halbleiterbauelement integriert. Die Signale des internen Datenbusses 2 werden über eine Kommunikationsschnittstelle COM der LED-Einheit 3 empfangen. Das Taktsignal der Taktleitung CL wird an den weiter unten beschriebenen Mikroprozessor 401 weitergeleitet, wohingegen der Datenstrom der Datenleitung DL nach Decodierung in der Kommunikationsschnittstelle COM auf 8-Bit-Schieberegister SR0-SR4 gegeben wird. Der vom Schieberegister SR0 ausgegebene Wert zeigt dabei die gewünschte Gesamthelligkeit der LED-Einheit 3 an, wohingegen über die Werte der Schieberegister SR1 bis SR4 die Farbanteile der einzelnen Einfarb-LEDs 301-304 zur Erzeugung der gewünschten Mischfarbe ausgegeben werden. Insbesondere wird über das Schieberegister SR1 der Farbanteil der rot emittierenden LED 301, über das Schieberegister SR2 der Farbanteil der grün emittierenden LED 302, über das Schieberegister 303 der Farbanteil der blauen emittierenden LED 303 und über das Schieberegister 304 der Farbanteil der Weißlicht emittierenden LED 304 ausgegeben.

Die Werte der einzelnen Schieberegister werden dem Mikrocontroller 4 zugeführt, der eine Logik bzw. einen Mikroprozessor 401 sowie einen zugeordneten nichtflüchtigen EEPROM-Speicher 402 aufweist. In diesem Speicher 402 können insbesondere Kalibrierungsdaten hinterlegt sein, die aus einem Kalibriervorgang der LED-Einheit 3 stammen und für einen vorgegebenen Standard-Temperaturwert der LED-Einheit 3 festlegen, wie die Betriebsströme der einzelnen Einfarb-LEDs 301-304 einzustellen sind, damit der aus dem Schieberegister SR0 stammende Gesamthelligkeitswert sowie die Farbmischung (d.h. der diesbezügliche Farbort) entsprechend den Werten aus den Schieberegistern SR1 bis SR4 erreicht werden.

Der Mikroprozessor 401 greift auf die im Speicher 402 hinterlegten Werte zurück und kann einen aktuellen Temperaturwert mittels eines Temperatursensors 8 empfangen, der im Halbleiterbauelement der LED-Einheit 3 integriert ist. Im Mikroprozessor 401 ist zum Beispiel ein Temperatur-Algorithmus hinterlegt, der unter Zugriff auf den Speicher 402 die entsprechenden Betriebsströme für den oben genannten Standard-Temperaturwert bestimmt und diese Betriebsströme bei Abweichung des vom Temperatursensor 8 stammenden aktuellen Temperaturwerts von dem Standard-Temperaturwert geeignet korrigiert.

Auf diese Weise kann mittels der Korrektur eine gewünschte Helligkeit und ein vorgegebener Farbort entsprechend den Werten aus den Schieberegistern SR0-SR4 auch bei Temperaturschwankungen richtig eingestellt und konstant gehalten werden. In dem Temperatur-Algorithmus des Mikroprozessors 401 wird somit die Tatsache berücksichtigt, dass die Temperatur der LED-Einheit 3 Auswirkungen auf deren Betrieb hat, so dass zur Erreichung einer erwünschten Helligkeit und eines erwünschten Farborts eine temperaturabhängige Korrektur durchführbar ist.

Der Temperatursensor 8 ist dazu ausgebildet, mittels der Kommunikationsschnittstelle COM mit dem Verarbeitungsmodul 1 zu kommunizieren. Eine solche Kommunikation umfasst ein Empfangen und Versenden von Signalen oder Daten der jeweiligen Komponenten. Auf diese Weise kann mittels des Verarbeitungsmoduls 1 und des Temperatursensors 8 ein aktueller Temperaturwert am Ort der jeweiligen LED-Einheit 3 ermittelt und abgerufen werden.

Ein solches Abrufen des aktuellen Temperaturwertes erfolgt auch unabhängig von dem Betriebszustand der LEDs 301-304, sodass aufgrund des beschriebenen Aufbaus der LED-Einheit 3 und der Kommunikationsfähigkeit des Verarbeitungsmoduls 1 und des Temperatursensors 8 zu jeder Zeit der aktuelle Temperaturwert abgerufen werden kann. Beispielsweise fragt das Verarbeitungsmodul 1 in vorgegebenen Zeitintervallen bei dem Temperatursensor 8 nach dem aktuellen Temperaturwert an, sodass der Temperatursensor 8 die Temperatur misst und die Messsignale für das Verarbeitungsmodul 1 bereitstellt. Zusätzlich erfolgt eine Kommunikation zwischen dem Verarbeitungsmodul 1 und dem Temperatursensor 8 mittels des Mikrocontrollers 401 der jeweiligen LED-Einheit 3, welcher mit dem Verarbeitungsmodul 1 und mit dem Temperatursensor 8 signaltechnisch gekoppelt ist und eine bidirektionale Kommunikation zwischen den beiden Komponenten ermöglicht. Auf diese Weise kann eine präzise Temperaturmessung am Ort der LED-Einheit 3 auch bei Inaktivität der Beleuchtungsfunktion durchgeführt werden. Zudem kann der Betrieb der einzelnen Mehrfarb-LED-Einheiten 3 der Beleuchtungsvorrichtung 10 individuell und genau an die aktuelle Temperatur angepasst werden.

Die Betriebsströme für die einzelnen LEDs 301-304 werden über einen Spannungsregler RE bereitgestellt, der aus der in Figur 2 gezeigten Spannungsversorgung 5 die positive Spannung VDD und die negative Spannung VSS erhält. Der Mikroprozessor 401 erzeugt ferner einen Takt für einen entsprechenden Oszillator OS, der PWM-Generatoren G1-G4 zugeführt wird. Die Betriebsströme der einzelnen LEDs 301-304 werden in den Generatoren G1 bis G4 über Pulsweitenmodulation erzeugt. Die aus dem Algorithmus zur Temperaturkompensation stammenden Werte der Betriebsströme werden von dem Mikroprozessor 401 an die einzelnen Generatoren G1-G4 gegeben. Der Generator G1 erzeugt mittels Pulsweitenmodulation den Strom für die rot emittierende LED 301, der Generator G2 den Strom für die grün emittierende LED 302, der Generator G3 den Strom für die blau emittierende LED 303 und der Generator G4 den Strom für die weiß emittierende LED 304. Über die von den einzelnen Generatoren erzeugten PWM-Signale, die über den Stromausgang CO zu den Einfarb-LEDs 301-304 gelangen, wird dann für LED-Einheit 3 das entsprechende Licht mit der gewünschten Helligkeit und dem gewünschten Farbort gemäß dem Signal eingestellt, das über den internen Datenbus 2 zu der LED-Einheit 3 gelangt.

Mittels der beschriebenen Beleuchtungsvorrichtung 10 sowie dem Beleuchtungssystem 110 können der lichtemittierende Betrieb als auch weitere Funktionen des Kraftfahrzeugs 100 nutzbringend gesteuert werden. Beispielsweise kann unabhängig von der Beleuchtungsfunktion eine Lüfter- oder Klimaanlage des Kraftfahrzeugs 100 in Abhängigkeit des oder mehrerer ermittelter Temperaturwerte aktiviert werden, um ein Erwärmen oder Abkühlen des Fahrzeuginnenraums einzuleiten.

Die Beleuchtungsvorrichtung 10 ermöglicht aufgrund des beschriebenen Aufbaus und der geschilderten Eigenschaften eine Temperaturanpassung, welche auf ein Ermitteln und Abrufen des aktuellen Temperaturwertes basiert, der mittels des Temperatursensors 8 im Halbleiterbauelement am Ort der jeweiligen Mehrfarb-LED-Einheit 3 präzise bestimmbar ist.

### Bezugszeichenliste

- 1: Verarbeitungsmodul
- 10: Beleuchtungsvorrichtung
- 100: Kraftfahrzeug
- 101: LIN-Transceiver
- 102: Mikroprozessor
- 110: Beleuchtungssystem
- 2: interner Datenbus
- 3: Mehrfarb-LED-Einheit
- 301-304: Einfarb-LEDs
- 4: Mikrocontroller
- 401: Mikroprozessor
- 402: EEPROM
- 5: Spannungsversorgung
- 6: Kraftfahrzeug-Datenbus
- 7: Gehäuse der LED-Einheit
- 8: Temperatursensor

- CL: Leitung für Taktsignal
- CO: Stromausgang
- COM: Kommunikationsschnittstelle
- DL: Datenleitung
- G1-G4: PWM-Generatoren
- L1-L2: Stromleitungen
- OS: Oszillator
- RE: Spannungsregler
- SR0-SR4: Schieberegister
- VDD, VSS: Spannungen

## Patentansprüche

1. Beleuchtungsvorrichtung (10) für ein Kraftfahrzeug (100), umfassend:
- ein Verarbeitungsmodul (1), welches dazu ausgebildet ist, Signale von einem Datenbus (6) des Kraftfahrzeugs (100) zu empfangen, zu verarbeiten und zu versenden, und
- eine Mehrzahl von LED-Einheiten (3), welche jeweils dazu ausgebildet sind, in einem betriebsgemäßen Zustand Licht mit einstellbarer Helligkeit und vorgegebenem Farbort zu emittieren, wobei die LED-Einheiten (3) jeweils einen Mikrocontroller (4) und eine Mehrzahl von LEDs (301, 302, 303, 304) aufweisen, wobei der jeweilige Mikrocontroller (4) und die zugehörigen LEDs (301, 302, 303, 304) von einem Gehäuse (7) der jeweiligen LED-Einheit (3) umgeben sind, und wobei die LED-Einheiten (3) jeweils einen Temperatursensor (8) umfassen, der jeweils dazu ausgebildet ist, einen aktuellen Temperaturwert an der zugehörigen LED-Einheit (3) zu messen und bidirektional mit dem Verarbeitungsmodul (1) zu kommunizieren, sodass mittels des jeweiligen Temperatursensors (8) und des Verarbeitungsmoduls (1) der aktuelle Temperaturwert an der jeweiligen LED-Einheit (3) ermittelbar ist, und wobei der aktuelle Temperaturwert an der jeweiligen LED-Einheit (3) unabhängig von einem Betriebszustand der zugehörigen LEDs (301, 302, 303, 304) abrufbar ist, wobei ferner der jeweilige Mikrocontroller (4) und das Verarbeitungsmodul (1) dazu ausgebildet sind, bidirektional miteinander zu kommunizieren, die Beleuchtungsvorrichtung (10) ist **dadurch gekennzeichnet, dass** der jeweilige Temperatursensor (8) dazu ausgebildet ist, bidirektional mit dem zugehörigen Mikrocontroller (4) zu kommunizieren, sodass mittels des Temperatursensors (8) und des Mikrocontrollers (4) der aktuelle Temperaturwert an der jeweiligen LED-Einheit (3) abrufbar ist.

2. Beleuchtungsvorrichtung (10) nach Anspruch 1, bei der die jeweilige LED-Einheit (3) eine Mehrfarb-LED-Einheit und die zugehörigen LEDs (301, 302, 303, 304) jeweils Einfarb-LEDs sind.

3. Beleuchtungsvorrichtung (10) nach einem der Ansprüche 1 bis 2, bei der die jeweilige LED-Einheit (3) eine RGB-LED-Einheit und/oder eine RGBW-LED-Einheit umfasst.

4. Beleuchtungsvorrichtung (10) nach einem der Ansprüche 1 bis 3, bei der die jeweilige LED-Einheit (3) einen Lichtsensor aufweist, der dazu ausgebildet ist, einen aktuellen Helligkeitswert an der jeweiligen LED-Einheit (3) zu messen und bidirektional mit dem Verarbeitungsmodul (1) zu kommunizieren, sodass mittels des Lichtsensors (8) und des Verarbeitungsmoduls (1) der aktuelle Helligkeitswert an der jeweiligen LED-Einheit (3) abrufbar ist.

5. Beleuchtungssystem (110) für ein Kraftfahrzeug (100), umfassend:
- das Kraftfahrzeug (100), und
- mindestens eine Beleuchtungsvorrichtung (10) nach einem der Ansprüche 1 bis 4.

6. Beleuchtungssystem (110) nach Anspruch 5, bei dem die Beleuchtungsvorrichtung (10) in dem Kraftfahrzeug (100) angeordnet und als Innenraumbeleuchtung ausgebildet ist.

7. Beleuchtungssystem (110) nach Anspruch 5 oder 6, bei der die Beleuchtungsvorrichtung (10) an einer Außenseite des Kraftfahrzeugs (100) angeordnet und als Außenbeleuchtung ausgebildet ist.

8. Verfahren zum Betreiben eines Beleuchtungssystems (110) für ein Kraftfahrzeug (100) nach einem der Ansprüche 5 bis 7, umfassend:
- Ansteuern eines jeweiligen Temperatursensors (8) mittels des Verarbeitungsmoduls (1) zum Ermitteln eines aktuellen Temperaturwertes an der zugehörigen LED-Einheit (3),
- Empfangen von Messsignalen des jeweiligen Temperatursensors (8),
- Ermitteln eines aktuellen Temperaturwertes an der jeweiligen LED-Einheit (3) in Abhängigkeit der empfangenen Messsignale des zugehörigen Temperatursensors (8), und
- Steuern einer Funktion des Kraftfahrzeugs (100) in Abhängigkeit des ermittelten Temperaturwertes an der jeweiligen LED-Einheit (3).

9. Verfahren nach Anspruch 8, umfassend:
- Ansteuern eines jeweiligen Lichtsensors mittels des Verarbeitungsmoduls (1) zum Ermitteln eines aktuellen Helligkeitswertes an der zugehörigen LED-Einheit (3),
- Empfangen von Messsignalen des jeweiligen Lichtsensors,
- Ermitteln eines aktuellen Helligkeitswertes an der jeweiligen LED-Einheit (3) in Abhängigkeit der empfangenen Messsignale des zugehörigen Lichtsensors, und
- Steuern einer Funktion des Kraftfahrzeugs (100) in Abhängigkeit des ermittelten Helligkeitswertes an der jeweiligen LED-Einheit (3).

10. Verfahren nach Anspruch 8 oder 9, bei dem das Steuern einer Funktion des Kraftfahrzeugs (100) in Abhängigkeit des ermittelten Temperaturwertes und/oder des ermittelten Helligkeitswertes an der jeweiligen LED-Einheit (3) umfasst:
Speichern des ermittelten Temperaturwertes und/oder des ermittelten Helligkeitswertes an der jeweiligen LED-Einheit (3) in einem Datenspeicher.

## Claims

1. Lighting apparatus (10) for a motor vehicle (100), comprising:
- a processing module (1) designed to receive, process and send signals from a data bus (6) of the motor vehicle (100), and
- a plurality of LED units (3), each designed so as in an operational state to emit light of adjustable brightness and prescribed colour locus, wherein the LED units (3) each have a microcontroller (4) and a plurality of LEDs (301, 302, 303, 304), wherein the respective microcontroller (4) and the related LEDs (301, 302, 303, 304) are surrounded by a package (7) of the respective LED unit (3), and wherein the LED units (3) each comprise a temperature sensor (8), designed in each case to measure a present temperature value on the related LED unit (3) and to communicate bidirectionally with the processing module (1), so that the present temperature value on the respective LED unit (3) is ascertainable by means of the respective temperature sensor (8) and the processing module (1), and wherein the present temperature value on the respective LED unit (3) is recallable independently of an operating state of the related LEDs (301, 302, 303, 304), wherein, further, the respective microcontroller (4) and the processing module (1) are designed to communicate bidirectionally with one another, the lighting apparatus (10) is **characterized in that** the respective temperature sensor (8) is designed to communicate bidirectionally with the related microcontroller (4), so that the present temperature value on the respective LED unit (3) is recallable by means of the temperature sensor (8) and the microcontroller (4).

2. Lighting apparatus (10) according to Claim 1, in which the respective LED unit (3) is a multicolour LED unit and the related LEDs (301, 302, 303, 304) are each single-colour LEDs.

3. Lighting apparatus (10) according to either of Claims 1 and 2, in which the respective LED unit (3) comprises an RGB LED unit and/or an RGBW LED unit.

4. Lighting apparatus (10) according to one of Claims 1 to 3, in which the respective LED unit (3) has a light sensor designed to measure a present brightness value on the respective LED unit (3) and to communicate bidirectionally with the processing module (1), so that the present brightness value on the respective LED unit (3) is recallable by means of the light sensor (8) and the processing module (1).

5. Lighting system (110) for a motor vehicle (100), comprising:
- the motor vehicle (100), and
- at least one lighting apparatus (10) according to one of Claims 1 to 4.

6. Lighting system (110) according to Claim 5, in which the lighting apparatus (10) is arranged in the motor vehicle (100) and is in the form of interior lighting.

7. Lighting system (110) according to Claim 5 or 6, in which the lighting apparatus (10) is arranged on an outside of the motor vehicle (100) and is in the form of exterior lighting.

8. Method for operating a lighting system (110) for a motor vehicle (100) according to one of Claims 5 to 7, comprising:
- actuating a respective temperature sensor (8) by means of the processing module (1) to ascertain a present temperature value on the related LED unit (3),
- receiving measurement signals of the respective temperature sensor (8),
- ascertaining a present temperature value on the respective LED unit (3) on the basis of the received measurement signals of the related temperature sensor (8), and
- controlling a function of the motor vehicle (100) on the basis of the ascertained temperature value on the respective LED unit (3).

9. Method according to Claim 8, comprising:
- actuating a respective light sensor by means of the processing module (1) to ascertain a present brightness value on the related LED unit (3),
- receiving measurement signals of the respective light sensor,
- ascertaining a present brightness value on the respective LED unit (3) on the basis of the received measurement signals of the related light sensor, and
- controlling a function of the motor vehicle (100) on the basis of the ascertained brightness value on the respective LED unit (3).

10. Method according to Claim 8 or 9, in which the controlling of a function of the motor vehicle (100) on the basis of the ascertained temperature value and/or the ascertained brightness value on the respective LED unit (3) comprises:
storing the ascertained temperature value and/or
the ascertained brightness value on the respective LED unit (3) in a data memory.

## Revendications

1. Dispositif d'éclairage (10) destiné à un véhicule automobile (100), comprenant :
- un module de traitement (1) qui est réalisé pour recevoir, traiter et envoyer des signaux provenant d'un bus de données (6) du véhicule automobile (100), et
- une pluralité d'unités à DEL (3) qui sont réalisées respectivement pour émettre dans un état de fonctionnement de la lumière ayant une luminosité réglable et une localisation chromatique prédéfinie, les unités à DEL (3) présentant respectivement un microcontrôleur (4) et une pluralité de DEL (301, 302, 303, 304), le microcontrôleur (4) respectif et les DEL (301, 302, 303, 304) associées étant entourés par un boîtier (7) de l'unité à DEL (3) respective, et les unités à DEL (3) comprenant respectivement un capteur de température (8) qui est réalisé respectivement pour mesurer une valeur de température actuelle au niveau de l'unité à DEL (3) associée et pour communiquer de manière bidirectionnelle avec le module de traitement (1) de sorte que la valeur de température actuelle au niveau de l'unité à DEL (3) respective peut être déterminée au moyen du capteur de température (8) respectif et du module de traitement (1), et la valeur de température actuelle au niveau de l'unité à DEL (3) respective pouvant être extraite indépendamment d'un état de fonctionnement des DEL (301, 302, 303, 304) associées, le microcontrôleur (4) respectif et le module de traitement (1) étant en outre réalisés pour communiquer ensemble de manière bidirectionnelle,
le dispositif d'éclairage (10) est **caractérisé en ce que** le capteur de température (8) respectif est réalisé pour communiquer de manière bidirectionnelle avec le microcontrôleur (4) associé de sorte que la valeur de température actuelle au niveau de l'unité à DEL (3) respective peut être extraite au moyen du capteur de température (8) et du microcontrôleur (4).

2. Dispositif d'éclairage (10) selon la revendication 1, dans lequel l'unité à DEL (3) respective est une unité à DEL polychrome et les DEL (301, 302, 303, 304) associées sont respectivement des DEL monochromes.

3. Dispositif d'éclairage (10) selon l'une quelconque des revendications 1 à 2, dans lequel l'unité à DEL (3) respective comprend une unité à DEL RGB et/ou une unité à DEL RGBW.

4. Dispositif d'éclairage (10) selon l'une quelconque des revendications 1 à 3, dans lequel l'unité à DEL (3) respective présente un capteur de lumière qui est réalisé pour mesurer une valeur de luminosité actuelle au niveau de l'unité à DEL (3) respective et pour communiquer de manière bidirectionnelle avec le module de traitement (1) de sorte que la valeur de luminosité actuelle au niveau de l'unité à DEL (3) respective peut être extraite au moyen du capteur de lumière (8) et du module de traitement (1).

5. Système d'éclairage (110) pour un véhicule automobile (100), comprenant :
- le véhicule automobile (100), et
- au moins un dispositif d'éclairage (10) selon l'une quelconque des revendications 1 à 4.

6. Système d'éclairage (110) selon la revendication 5, dans lequel le dispositif d'éclairage (10) est disposé dans le véhicule automobile (100) et est réalisé sous forme d'éclairage d'habitacle.

7. Système d'éclairage (110) selon la revendication 5 ou 6, dans lequel le dispositif d'éclairage (10) est disposé sur une face extérieure du véhicule automobile (100) et est réalisé sous forme d'éclairage extérieur.

8. Procédé permettant de faire fonctionner un système d'éclairage (110) destiné à un véhicule automobile (100) selon l'une quelconque des revendications 5 à 7, comprenant les étapes consistant à :
- piloter un capteur de température (8) respectif au moyen du module de traitement (1) afin de déterminer une valeur de température actuelle au niveau de l'unité à DEL (3) associée,
- recevoir des signaux de mesure du capteur de température (8) respectif,
- déterminer une valeur de température actuelle au niveau de l'unité à DEL (3) respective en fonction des signaux de mesure reçus du capteur de température (8) associé, et
- commander une fonction du véhicule automobile (100) en fonction de la valeur de température déterminée au niveau de l'unité à DEL (3) respective.

9. Procédé selon la revendication 8, comprenant les étapes consistant à :
- piloter un capteur de lumière respectif au moyen du module de traitement (1) afin de déterminer une valeur de luminosité actuelle au niveau de l'unité à DEL (3) associée,
- recevoir des signaux de mesure du capteur de lumière respectif,
- déterminer une valeur de luminosité actuelle au niveau de l'unité à DEL (3) respective en fonction des signaux de mesure reçus du capteur de lumière associé, et
- commander une fonction du véhicule automobile (100) en fonction de la valeur de luminosité déterminée au niveau de l'unité à DEL (3) respective.

10. Procédé selon la revendication 8 ou 9, dans lequel la commande d'une fonction du véhicule automobile (100) en fonction de la valeur de température déterminée et/ou de la valeur de luminosité déterminée au niveau de l'unité à DEL (3) respective comprend :
la mémorisation de la valeur de température déterminée et/ou de la valeur de luminosité déterminée au niveau de l'unité à DEL (3) respective dans une mémoire de données.
